# EUROPEAN PATENT SPECIFICATION

(11) **EP 1 927 797 B1**
(45) Date of publication and mention of the grant of the patent: **23.12.2009**
(21) Application number: 07020348.4
(22) Date of filing: 18.10.2007
(51) Int. Cl.: F16J 15/06, F16J 15/16, F16J 15/32, F16J 15/54

(54) **Seal ring and seal structure**
Dichtungsring und Dichtungsstruktur
Bague d'étanchéité et structure d'étanchéité

(30) Priority: 29.11.2006 JP 2006321856
(43) Date of publication of application: 04.06.2008
(73) Proprietor: Carl Freudenberg KG, 69469 Weinheim (DE)
(72) Inventor: Abe, Yoshiyuki, Fujisawa-shi Kanagawa 251-0042 (JP)

(56) References cited:
- EP-A- 0 766 027
- EP-A- 1 630 461
- JP-A- 11 044 363
- US-A- 5 664 536

## Description

### BACKGROUND OF THE INVENTION

### 1. Field of the Invention

The present invention relates to a sealing assembly, comprising a seal ring and two members, wherein the seal ring seals an annular gap between the two members that are provided to allow their relative movement.
A seal ring sealing a side wall surface in a non-sealed subject fluid side of an annular groove provided in one member of two members assembled in such a manner as to be relatively rotatable in a concentric manner, and a front surface of the other member of the two members, thereby sealing an annular gap between the two members, in which a protruding portion protruding toward a groove bottom of the annular groove is provided in a peripheral surface in a side arranged so as to face to the groove bottom in a peripheral surface of a seal ring main body and that the protruding portion is provided in such a manner that a width in an axial direction becomes narrower progressively decreasing toward the groove bottom, and is provided in such a manner that leading end regions in a peripheral direction become narrower progressively decreasing respectively toward a leading end portion in the peripheral direction, wherein a relative movement between the one member and the seal ring main body is regulated by being installed to the annular groove having the groove bottom provided with a notch portion corresponding to the protruding portion.

### 2. Description of the Related Art

Such a sealing assembly is disclosed in US-5 018 753. The known sealing joint for parts of hydraulic equipments in relative rotating motion, of the constituted by the combination of a friction ring of hard material having good characteristics of resistance to friction and a ring of more flexible material, both rings being anchored to each other by means of holes cut into the face of the ring of hard material in contact with the more flexible material, characterized by the fact that said holes consist of many blind grooves parallel to the axis of rotation of the parts, and that the ring of more flexible material has, molded on, a corresponding number of ribs having practically the same width and height as the grooves but a shorter length, said ribs fitting into said grooves to interlock the two rings in rotation.
There are a lot of processing steps because of the large number of grooves and ribs.

Another sealing assembly is disclosed in US 2003/0102633 A1. This document discloses a well-known seal ring for use in hydraulic apparatus such as an automatic transmission. The seal ring has a separating portion extending in axial direction and a protrusion portion provided in a peripheral surface, wherein the protruding portion is provided in such a manner that a width in an axial direction becomes narrower progressively decreasing toward the groove bottom and that the leading end regions in a peripheral direction become narrower progressively decreasing respectively toward a leading end portion in the peripheral direction.

Another a seal ring is disclosed in EP 0 766 027 A1.

Another seal ring is disclosed in EP 1 630 461 A1 and in JP 11-044,363 A. The disclosed seal rings each have axial means for preventing the rotation of the seal ring in relation to its housing.

Another seal ring is disclosed in US-A-5 664 536. This prior-art seal ring discloses the use of a notch portion and its corresponding part in the field of pistons and rods.

The seal ring is a split piston ring and the free ends of the ring are separated by a gap.

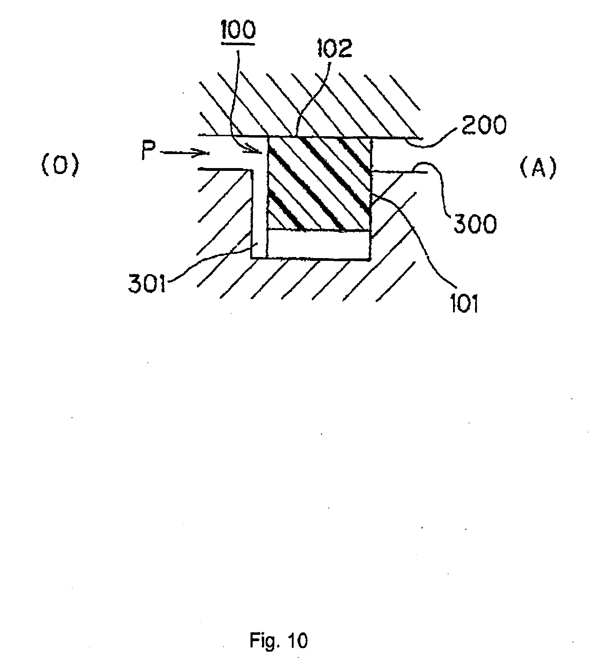

A seal ring and a seal structure that seal an annular gap between two members is conventionally used in a hydraulic power unit, e.g., an automatic transmission in an automobile. A seal ring according to a conventional technology will now be explained hereinafter with reference to FIG. 10. FIG. 10 is a schematic cross-sectional view showing a disposed state of a seal ring according to a conventional technology. An illustrated seal ring 100 seals an annular gap between a housing 200 having a shaft hole provided therein and a shaft 300 inserted in this shaft hole, and it is disposed and used in an annular groove 301 provided in the shaft 300. The seal ring 100 is formed of a resin material, and includes a first seal portion 101 that seals a side wall surface of the annular groove 301 provided in the shaft 300 and a second seal portion 102 that seals an inner peripheral surface of the shaft hole provided in the housing 200.

Further, when a pressure is applied along a direction indicated by an arrow P in the drawing from a sealed subject fluid side O toward a non-sealed subject fluid side A, since the seal ring 100 is pushed toward the non-sealed subject fluid side A, the first seal portion 101 pushes the side wall surface of the annular groove 301, and the second seal portion 102 pushes the inner peripheral surface of the shaft hole provided in the housing 200 facing the annular groove 301, thereby effecting sealing at respective positions.

A sealed subject fluid is prevented from leaking to the non-sealed subject fluid side A in this manner. Incidentally, there is Japanese Patent Publication No. 3536602 as a document disclosing a related conventional example.

In the above-explained seal ring 100, when the shaft 300 is formed of a soft material, e.g., an aluminum alloy in particular, slide of the first seal portion 101 and the side wall surface of the annular groove 301 based on relative rotation of the seal ring 100 and the shaft 300 causes the side wall surface of the annular groove 301 to be worn away notably. That is because a lubricating film made of a lubricating oil is hardly formed between the first seal portion 101 and the side wall surface of the annular groove 301, and abrasion intensifies when a foreign particle present in the lubricating oil enters a space between these members or an abrasion powder is accumulated in particular. When the side wall surface is worn away, occurrence of a rough surface or a hard foreign particle may possibly cause serious abrasion of the seal ring. As explained above, there is a concern that problems, e.g., a reduction in sealing properties or occurrence of contamination arise due to abrasion of the soft material, e.g., an aluminum alloy. As a countermeasure, a material or a shape of the seal ring has been examined, but abrasion may occur depending on, e.g., a situation of contamination in the lubricating oil, and taking a perfect measure by just impro-ving the seal ring is difficult. Therefore, the present applicant has proposed a disposing structure of a seal ring disclosed in Japanese Patent Publication No. 3536602. However, in this case, a countermeasure against the above-explained problem can be taken, but configurations of cooperating components of the seal ring become complicated, resulting in an increase in cost.

### SUMMARY OF THE INVENTION

In view of the above-explained problem, it is an object of the present invention to provide a sealing assembly, comprising a seal ring that a relative movement between the one member and the seal ring main body is regulated on the basis of an installation of the seal ring to the annular groove and that a seal ring and a seal structure can maintain stable sealing performance for a long time and are superior in quality without increasing a cost. Another object of the present invention is a small number of processing steps.

To attain this object, according to the present invention, there is provided a sealing assembly, comprising a seal ring sealing a side wall surface in a non-sealed subject fluid side (A) of an annular groove provided in one member of two members assembled in such a manner as to be relatively rotatable in a concentric manner, and a front surface of the other member of the two members, thereby sealing an annular gap between the two members, in which a protruding portion protruding toward a groove bottom of the annular groove is provided in a peripheral surface in a side arranged so as to face to the groove bottom in a peripheral surface of a seal ring main body and that the protruding portion is provided in such a manner that a width in an axial direction becomes narrower progressively decreasing toward the groove bottom, and is provided in such a manner that leading end regions in a peripheral direction become narrower progressively decreasing respectively toward a leading end portion in the peripheral direction, a relative movement between the one member and the seal ring main body is regulated by being installed to the annular groove having the groove bottom provided with a notch portion corresponding to the protruding portion, characterized in that there are two notch portions wherein the two notch portions are arranged at equal intervals in the circumferential direction and opposite to each other in the radial direction and at equal intervals in the circumferential direction to a separating portion of the sealing ring.

Furthermore, there is provided a seal structure comprising a seal ring as described above, in which the annular groove is provided with a groove bottom provided with a notch portion corresponding to the protruding portion, and that a relative movement between the one member and the seal ring main body is regulated on the basis of an installation of the seal ring to the annular groove sealing a side wall surface in a non-sealed subject fluid side of an annular groove.

When the protruding portion is provided to the seal ring and the seal ring is disposed in the annular groove having the groove bottom where the concave portion corresponding to the protruding portion is provided, the seal ring is disposed in a state where it is positioned with respect to one member in the annular groove. Therefore, even if the two members concentrically assembled to allow their relative movement relatively rotate, a relative movement (slide) of the seal ring and the one member can be regulated without interposing the other member between the seal ring and the one member (a rotation preventing effect can be obtained).

As a result, even if the one member is formed of a soft material, occurrence of abrasion of the one member can be suppressed at a low cost. Moreover, when occurrence of abrasion of the one member is suppressed, abrasion of the seal ring can be suppressed from occurring. That is, stable sealing performance can be maintained for a long time. Here, when the one member is formed of a soft material, it can be considered that the concave portion of the groove bottom may be slightly worn away in long-term use of the seal ring.

In such a case, the seal ring interferes with a dent (a step) generated from abrasion thereof, and its movement in an axial direction is restricted. As a result, a seal surface with respect to the side wall surface cannot be assured, and hence there is a concern of leakage due to an operation defect.

However, according to the present invention, since the protruding portion is provided in such a manner that its width in the axial direction is gradually narrowed toward the groove bottom and it is also provided in such a manner that its distal end portion in a peripheral direction is gradually narrowed toward the distal end in the peripheral direction, the seal ring can move in the axial direction toward the other side of the step. As a result, the seal surface with respect to the side wall surface can be assured, thereby maintaining further stable sealing performance. According to the present invention, it is possible to provide the seal ring and the seal structure which can maintain stable sealing performance for a long time and are superior in quality without increasing a cost.

### BRIEF DESCRIPTION OF THE DRAWINGS

FIG. 1(a) is a plan view of a seal ring according to an embodiment of the present invention, FIG. 1 (b) is a perspective view showing a primary part of the seal ring from an inner peripheral side, FIG. 1 (c) is a cross-sectional view of the primary part of the seal ring, and FIG. 1 (d) is a view showing the primary part of the seal ring from the inner peripheral side;
FIG. 2(a) is a view showing two members to which the seal ring according to the embodiment of the present invention is disposed, FIG. 2(b) is a cross-sectional view taken along a line B-B in FIG. 2(a), and FIG. 2(c) is a view showing another conformation of a part indicated by a broken line on the right-hand side of FIG. 2(b);
FIG. 3 is a cross-sectional view of the seal ring taken along a line A-A in FIG. 1;
FIG. 4 is a partially ruptured perspective view showing a disposed state of the seal ring according to the embodiment of the present invention;
FIG. 5(a) is a view showing a state where an annular groove is worn away due to long-term use in a seal structure according to the embodiment, and FIG. 5(b) is a view for explaining an example where an oil pressure functions in a state where the annular groove is worn away due to long-term use in the seal structure according to the embodiment;
FIG. 6(a) is an image view showing a state where the annular groove is worn away due to long-term use in the seal structure according to the embodiment from an outer peripheral side of the seal ring, and FIG. 6(b) is a view for explaining an example where an oil pressure functions in the state depicted in FIG. 6(a);
FIG. 7(a) is an image view showing a state where an annular groove is worn away due to long-term use in a seal structure according to a comparative example from an outer peripheral side of a seal ring, and FIG 7(b) is a view for explaining an example where an oil pressure functions in the state depicted in FIG 7(a);
FIG 8 is a view showing an initial state (at the time of a normal operation) as a state where the seal ring is disposed in the annular groove;
FIG. 9 is a virtual view of long-term use in a state where the seal ring is disposed in the annular groove; and
FIG 10 is a view showing a seal ring according to a conventional technology.

### DETAILED DESCRIPTION OF THE PREFERRED EMBODIMENT

The best mode for carrying out the present invention will now be explained hereinafter in detail with reference to the accompanying drawings. However, dimension, material, shapes, relative arrangements, and others of constituent parts explained in this embodiment should be appropriately changed based on a configuration of an apparatus to which the present invention is applied or various conditions, and the scope of the present invention is not restricted to the following embodiment.

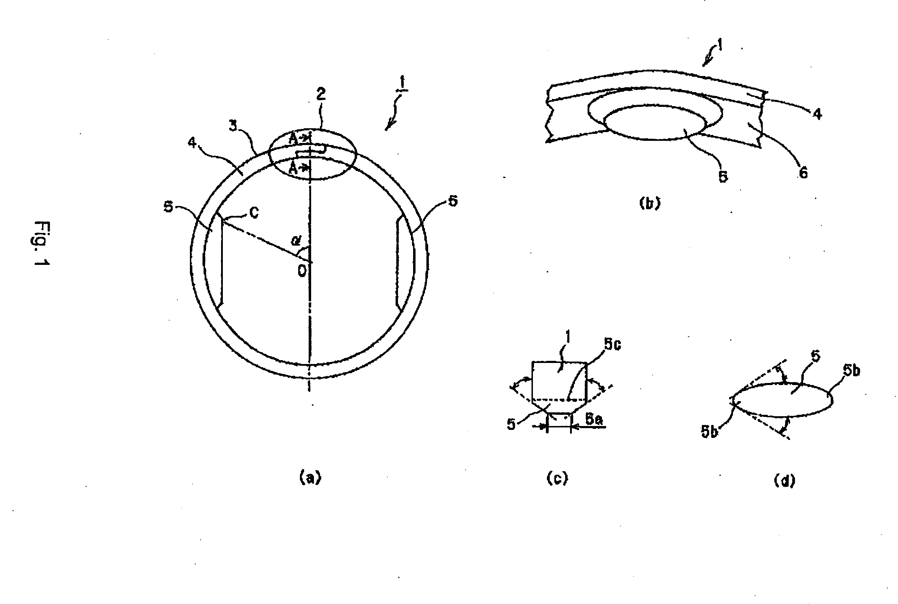

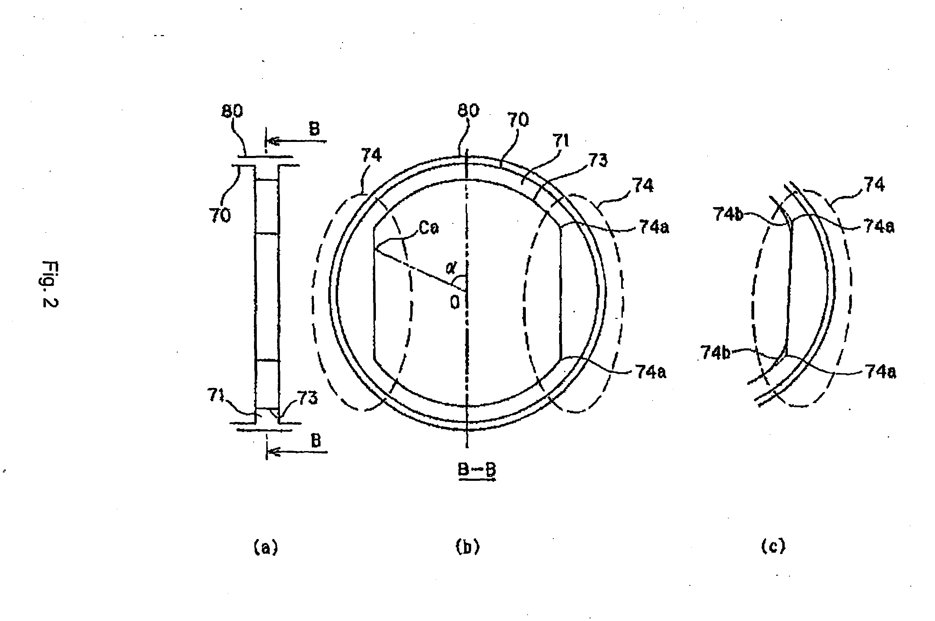

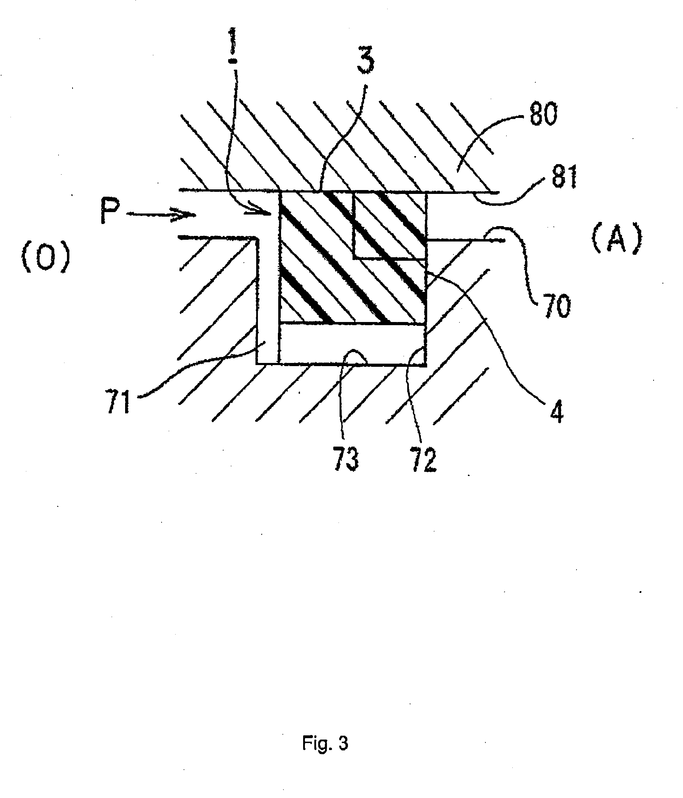

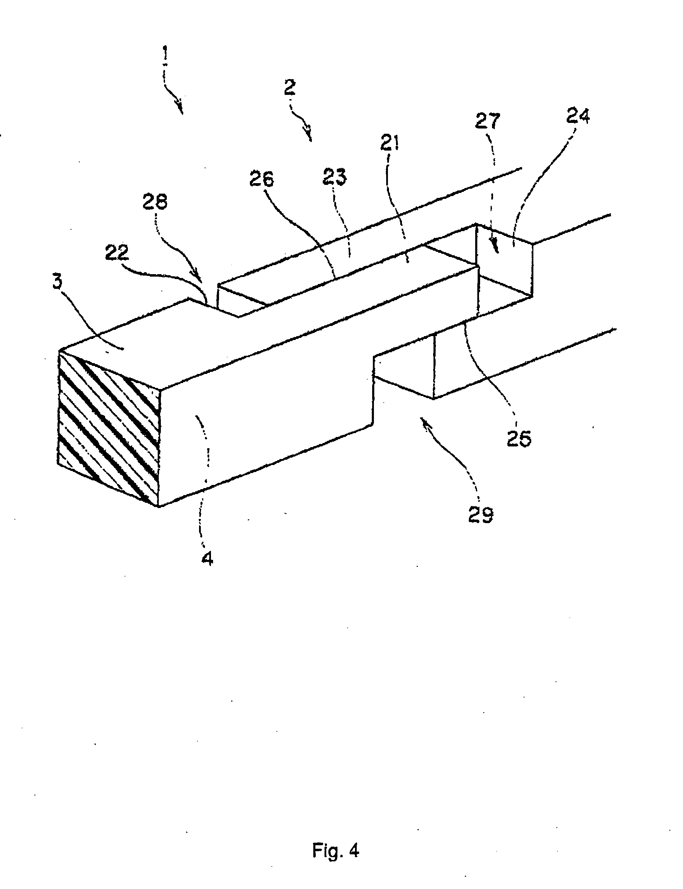

A seal ring 1 and a seal structure according to Embodiment 1 of the present invention will now be explained with reference to FIGS. 1 to 4. FIG. 1 (a) is a plan view of the seal ring 1 according to Embodiment 1 of the present invention, FIG 1 (b) is a perspective view showing a primary part (a protruding portion) of the seal ring 1 according to this embodiment from an inner peripheral side, FIG. 1 (c) is a cross-sectional view of the primary part (the protruding portion) of the seal ring 1 according to this embodiment, and FIG. 1(d) is a view showing the primary part (the protruding portion) of the seal ring 1 according to this embodiment from the inner peripheral side. FIG. 2(a) is a view showing two members to which the seal ring 1 is disposed, FIG. 2(b) is a cross-sectional view taken along a line B-B in FIG. 2(a), and FIG. 2(c) is a view showing another conformation of a part indicated by a broken line on the right-hand side in FIG. 2(b). FIG. 3 is a cross-sectional view of the seal ling 1 taken along a line A-A in FIG. 1. FIG. 4 is a partially ruptured perspective view showing a disposed state of the seal ring 1 according to this embodiment.

The seal ring 1 seals an annular gap between a housing 80 as one member in which a shaft hole is provided and a shaft 70 as the other member inserted in this shaft hole, and it is disposed and used in an annular groove 71 provided in the shaft 70.

Further, the seal ring 1 is formed of a resin material, and includes a first seal portion 4 that seals a side wall surface 72 of the annular groove 71 provided in the shaft 70 on a non-sealed subject fluid side A and a second seal portion 3 that seals an inner peripheral surface 81 of the shaft hole provided in the housing 80.

Furthermore, when a pressure is applied along a direction indicated by an arrow P in FIG. 3 from a sealed subject fluid side O toward the non-sealed subject fluid side A, since the seal ring 1 is pushed to the non-sealed subject fluid side A, the first seal portion 4 pushes the side wall surface 72 of the annular groove 71, and the second seal portion 3 pushes the inner peripheral surface 81 of the shaft hole facing the annular groove 71, thereby effecting sealing at respective positions.

In this manner, a sealed subject fluid is prevented from leaking toward the non-sealed subject fluid side A. Here, when a sealed subject fluid is, e.g., a lubricating oil and utilized in a transmission of an automobile in particular, it is an ATF (automatic transmission fluid). Moreover, as shown in FIG. 1 (a), a separating portion 2 is provided in a ring main body of the seal ring 1 at one position in a peripheral direction in order to, e.g., improve assembling properties.

Although various conformations of such a separating portion 2 are known, a special step cut that is cut in a two-step shape is adopted as show in FIG. 4 as a structure that has a small leak amount and can preferably cope with a change in an ambient temperature in this embodiment. That is, as shown in FIG. 4, the step-shaped separating portion is formed on both the first seal portion 4 side and the second seal portion 3 side.

This special step cut includes a pair of a convex portion 21 and a concave portion 22 in a lateral direction (the axial direction) on one outer peripheral side through a separated part and also includes a pair of a concave portion 24 and a convex portion 23 in the lateral direction on the other side. Moreover, the convex portion 21 is fitted in the concave portion 24, and the convex portion 23 is fitted in the concave portion 22.

According to this special step cut, surfaces vertical to a circumferential direction have gaps (in FIG. 3, a gap 27 formed between a distal facet of the convex portion 21 and an opposed surface of the concave portion 24 facing the convex portion 21, a gap 28 formed between a distal facet of the convex portion 23 and an opposed surface of the concave portion 22 facing the convex portion 23, and a gap 29 on the inner peripheral side) with respect to the circumferential direction and block the sealed subject fluid side O and the non-sealed subject fluid side A.

That is, the convex portion 21 and the concave portion 24 slide on a separating surface 25 that is concentric with the second seal portion 3, and they also slide on a separating surface 26 that is vertical to the shaft. As a result, even though the above-explained gaps 27, 28, and 29 are provided, the separating portion 2 does not cut seal surfaces of both the second seal portion 3 and the first seal portion 4.

Therefore, even if a ring main body expands due to heat and intervals of the gaps 27, 28, and 29 fluctuate, a variation in a dimension corresponding to the gaps can be absorbed while maintaining a sealed state, thus maintaining sealing performance with respect to a change in an ambient temperature.

Additionally, the seal ring 1 according to this embodiment is characterized in that each protruding portion 5 that protrudes toward a groove bottom 73 is provided on an inner peripheral surface 6 on an internal diameter side arranged to face the groove bottom 73 of the annular groove 71 in order to obtain a rotation preventing effect for the shaft 70 (see FIG. 1 (b)). As shown in FIG. 1 (a), each part to which the protruding portion 5 is provided has a large wall thickness.

In this embodiment, the seal ring 1 is obtained by molding a thermoplastic resin material in a die. As the thermoplastic resin, a PEEK (polyether ether ketone) resin or PPS (polyphenylene sulfide) is preferable. It is to be noted that a material suitable for the seal ring 1 according to this embodiment is not restricted thereto, a material known as a seal ring material (e.g., PTFE (polytetrafluoroethylene)) can be applied.

A shape of the annular groove 71 in which the seal ring 1 is disposed will now be explained. The groove bottom (an outer peripheral surface) 73 of the annular groove 71 has a shape in which the seal ring 1 can be disposed as shown in FIG. 2(b), and notch portions 74 as concave portions in which the protruding portions 5 of the seal ring 1 can be disposed (arranged) are provided in the groove bottom 73. A conventional groove bottom has a circular cross section as a shape that can be made on a lathe. On the other hand, in this embodiment, notching a part of the groove bottom 73 having a substantially circular cross section obtains a shape having a changed (deepened) groove depth of the annular groove. As a method of providing a deep groove part, the notch portions 74 are provided in the groove bottom 73.

As notch processing, for example, forming a circular groove bottom and then performing cutting by using a milling cutter (an end mill) can suffice, which does not affect a cost.

Since the shape of the circular part of the groove bottom does not require a high precision, a surface formed by using a die, e.g., die casting may be used as it is. In this case, notch processing is performed by using, e.g., a milling cutter after molding using a die.

It is to be noted that, when a necessary precision can be assured in the notch portions, surfaces obtained by molding with a die can be used as they are without additional processing. However, there is a concern about occurrence of a clearance according to, e.g., the workmanship of the seal ring in the notch portions serving as rotation preventing portions. In such a case, the seal ring slightly slides in the groove for an amount corresponding to occurrence of the clearance, resulting in a factor of slight abrasion. Therefore, it is desirable to form the notch portions by post-processing so that they can be precisely processed to eliminate backlashes as much as possible.

Furthermore, in case of an application where the shaft rotates at a high speed, there is a concern that a center of gravity of the groove portion deviates from a shaft center and a centrifugal force is produced in a specific direction of the shaft during rotation depending on arrangement of the notches on the circumference, which becomes a factor of a damage to the shaft.

Therefore, in case of an application where the shaft rotates at a high speed, considering balance, it is desirable to arrange the two or more notch portions 74 equally (at equal intervals). It is to be noted that, when considering a cost, equally arranging the two notch portions is desirable since the number of processing steps is small.

Here, in a relationship of relative rotation of the shaft 70 and the housing 80, there are cases where the shaft 70 rotates and where the housing 80 rotates. When the shaft 70 to which the seal ring 1 is disposed does not rotate, or when a rotation speed is low even though the shaft 70 rotates, the notch portions 74 do not have to be arranged at equal intervals, and the notch portion 74 may be provided at one position alone.

In a relationship between the seal ring 1 and the shaft 70, when each of the protruding portion 5 of the seal ring 1 and the notch portion 74 associated with the protruding portion 5 is provided at one position, a rotation preventing effect can be obtained. Therefore, it is good enough to appropriately set the numbers of the protruding portion 5 and the notch portion 74 or arrangement of these members on the circumference in accordance with a specification of a product.

As shown in FIG 1 (a), the example where the protruding portions 5 are arranged at two positions on the circumference at equal intervals in the seal ring 1 according to this embodiment is explained. Although the positions of the protruding portions 5 on the circumference are not restricted in particular, it is good enough to provide the protruding portions 5 symmetrically in a lateral direction with the separating portion 2 at the center. As a result, sealing properties of the separating portion 2 can be stabilized.

As explained above, in this embodiment, the protruding portions 5 protruding toward the groove bottom 73 are provided to the seal ring 1 itself, and the seal ring 1 is disposed in the annular groove 71 having the groove bottom 73 in which the notch portions 74 associated with the protruding portions 5 are provided. As a result, the seal ring 1 can be positioned with respect to the annular groove 71, thereby obtaining a so-called rotation preventing effect for the seal ring 1.

As explained above, according to this embodiment, slide of the seal ring 1 and the shaft 70 can be substantially eliminated (regulated) without interposing other members between the seal ring 1 and the shaft 70. Therefore, even if the shaft 70 is formed of a soft material, e.g., an aluminum alloy, occurrence of abrasion of the annular groove 71, especially the side wall surface 72 can be suppressed with a low cost.

Here, although the notch having a straight shape is exemplified as the notch portion 74 in FIG 2, the present invention is not restricted thereto. That is, providing a part having a large groove depth in the groove depth can suffice, and the notch portion may have, e.g., an arc-like shape. Moreover, there is a concern that each end portion 74a (a boundary portion between the notch portion 74 and the groove bottom 73) of the notch portion 74 is worn away due to a function of a high surface pressure when the seal ring rotates. When each end portion 74a is worn away, this portion is apt to interfere with the seal ring 1. Therefore, as shown in FIG. 2(c), it is preferable to provide a chamfered portion 74b to each end portion 74a.

Additionally, although the seal ring 1 is disposed in the annular groove 71 formed in the shaft 70 as one of the two members in the above explanation, the present invention is not restricted thereto. The seal ring 1 may be disposed in the annular groove provided on the housing 80 side so that it slides in contact with the outer peripheral surface of the shaft 70. In this case, each protruding portion is provided on the outer peripheral surface of the seal ring 1 on an external diameter side. Further, although the example where the separating portion 2 is provided at one position of the ring main body of the seal ring 1 in the circumferential direction has been explained, the present invention is not restricted thereto. The seal ring 1 may have a so-called endless shape having no separating portion.

According to such a structure, even if the housing 80 is formed of a soft material, e.g., an aluminum alloy, occurrence of abrasion of the annular groove, especially the side wall surface of the housing 80 can be avoided with a low cost. An example where the seal ring 1 is used for a long time will now be explained. For example, in a case where the shaft 70 is formed of a soft material, e.g., an aluminum alloy, it can be considered that each notch portion 74 is slightly worn away when the seal ring 1 is used for a long time. In such a case, the seal ring 1 interferes with a dent (a step) formed due to abrasion thereof, and a movement in the axial direction is restricted. As a result, a seal surface on the side surface cannot be assured, and leakage due to an operation defect may possibly disadvantageously occur.

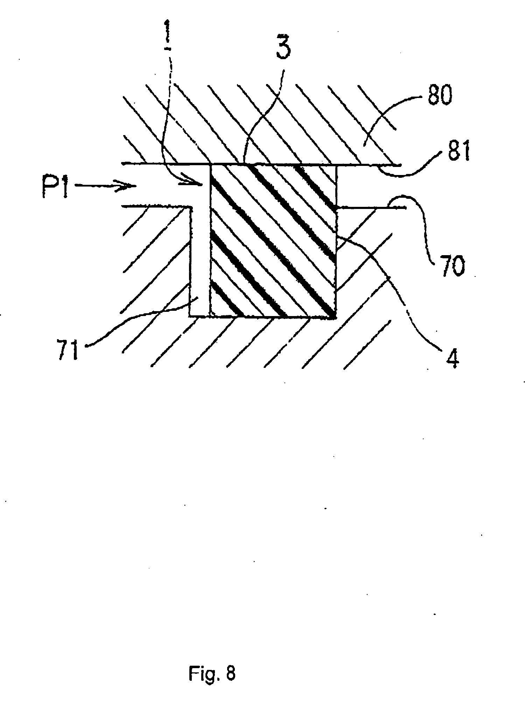

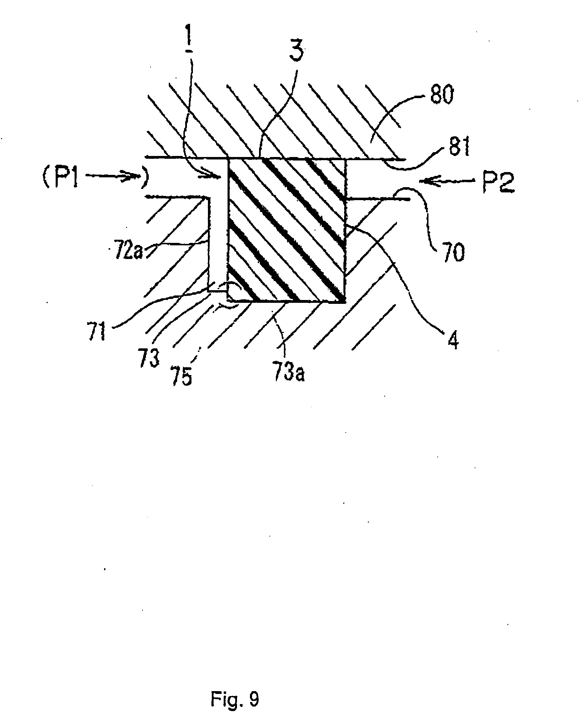

FIGS. 8 and 9 are views for explaining a concern when the seal ring 1 is disposed in the annular ring 71, and FIG. 8 is a view showing an initial state (in a normal operation) whilst FIG. 9 is a virtual view of an example where the seal ring 1 is used for a long time. It is assumed that a material of the housing 80 is hard as compared with that of the shaft and relatively superior in abrasion resistance. It is determined that, in the initial state or the normal operation, a C part of the protruding portion 5 of the seal ring 1 shown in FIG. 1 (a) comes into contact with a Ca part (see FIG. 2(b) of the notch portion 74 of the shaft 70 having a diameter size (dimension) associated with the C part to prevent rotation. In such a case, as shown in FIG. 8, the outer peripheral surface and the side surface of the seal ring 1 are appressed against the annular groove 71, and seal surfaces (the second seal portion 3 and the first seal portion 4) can be assured on the outer peripheral surface and the side surface of the seal ring 1, thereby avoiding leakage. On the other hand, since the groove bottom 73 is worn away in case of long-term use, it can be considered that such a step 75 as shown in FIG. 9 is produced between the groove bottom 73 and a worn groove bottom 73a.

In the example depicted in FIG. 9, no problem arises when a pressure P1 functions, but a movement of the seal ring 1 in the axial direction (a left-hand direction in FIG. 9) is interrupted by the step 75 produced from abrasion when a pressure P2 functions in a direction opposite to the pressure P1, and a seal surface cannot be assured with respect to a side wall surface 72a, resulting in occurrence of leakage.

Thus, in the seal ring 1 according to this embodiment, as shown in FIG 1, the protruding portion 5 is formed into a tapered shape to avoid such leakage. Here, when the protruding portion 5 has the tapered shape, this means that a width 5a of the protruding portion 5 in the axial direction (the inner peripheral side in this embodiment) is provided to be gradually narrowed toward the groove bottom 73 (see FIG. 1 (c)) and a distal end portion (a distal end region) 5b in the peripheral direction is provided to be gradually narrowed toward the most distal end portion in the peripheral direction (see FIG. 1 (d)), respectively. The protruding portion 5 is a protrusion having a so-called substantially-ship-bottom-like shape. Here, the conformation of the tapered shape is not restricted in particular, and it may be, e.g., a curved shape (an R shape) or a straight (linear) shape. It is to be noted that a broken line 5c in FIG 1 (c) indicates a boundary between the seal ring main body and the protruding portion 5.

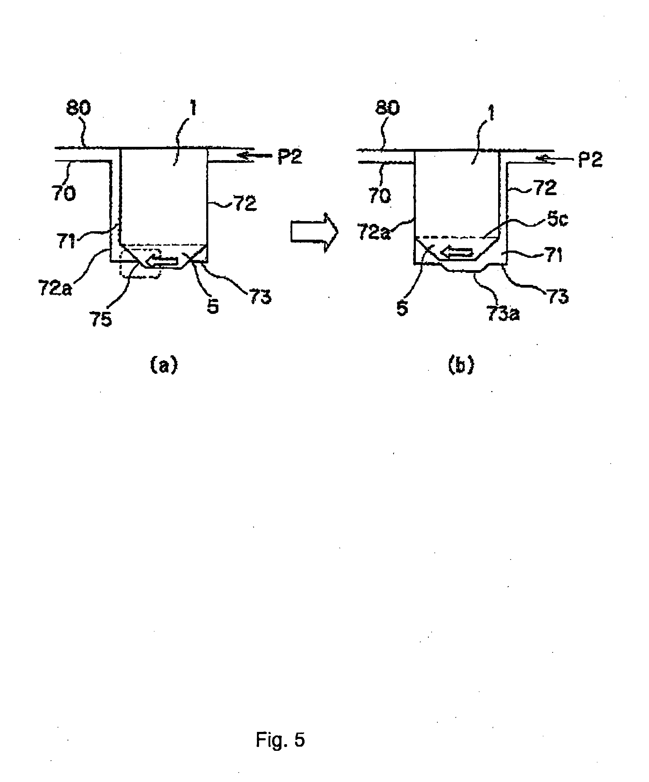

A function of the protruding portion 5 when the seal ring 1 is used for a long time will now be explained with reference to FIGS. 5 to 7. In the seal ring 1 according to this embodiment, since the protruding portion 5 having the tapered shape is provided, the above-explained leakage can be avoided. That is because the distal end portion 5b of the protruding portion 5 in the peripheral direction is provided to have the tapered shape in particular.

FIG 5(a) is a view showing a state where the annular groove 71 is worn away due to long-term use in the seal structure according to this embodiment, and FIG. 5(b) is a view for explaining an example where an oil pressure P2 functions in a state where the annular groove 71 is worn away due to long-term use in the seal structure according to this embodiment.

Since abrasion of the groove bottom 73 due to the seal ring occurs so as to enter not only the radial direction but also the peripheral direction, it can be considered that the seal ring 1 must slightly rotate with respect to the annular groove 71 in order to separate the protruding portion 5 of the seal ring 1 from the step 75. Therefore, it can be considered that forming not only the side surface (the width 5a in the axial direction) of the protruding portion 5 into the tapered shape but also forming the distal end portion 5b in the peripheral direction into the tapered shape allows a drag in a rotating direction of the seal ring 1 to function with respect to the distal end portion 5b having the tapered shape and the seal ring 1 slightly rotates with respect to the annular groove 71 to be separated fro the step 75 when a thrust due to the oil pressure P2 functions in the axial direction. This point will now be explained.

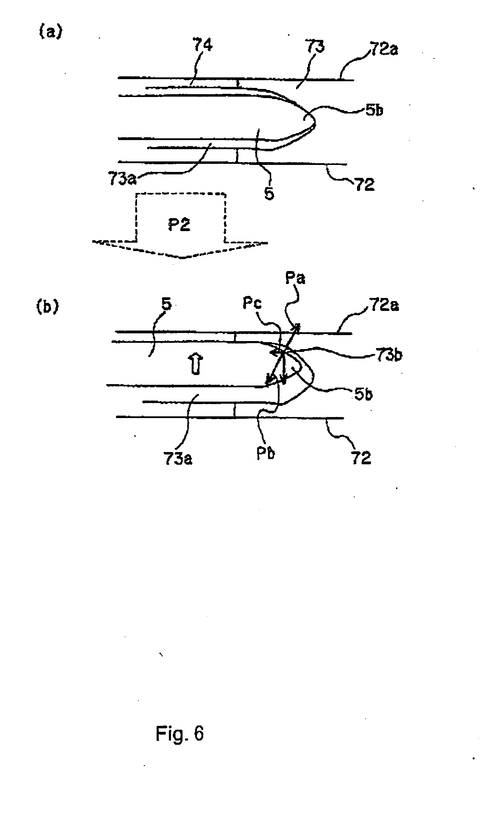

FIG. 6(a) is an image view showing a state where the annular groove 71 is worn away due to long-term use in the seal structure according to this embodiment from the outer peripheral side of the seal ring 1, and FIG. 6(b) is a view for explaining an example where the oil pressure P2 functions in the state depicted in FIG. 6(b).

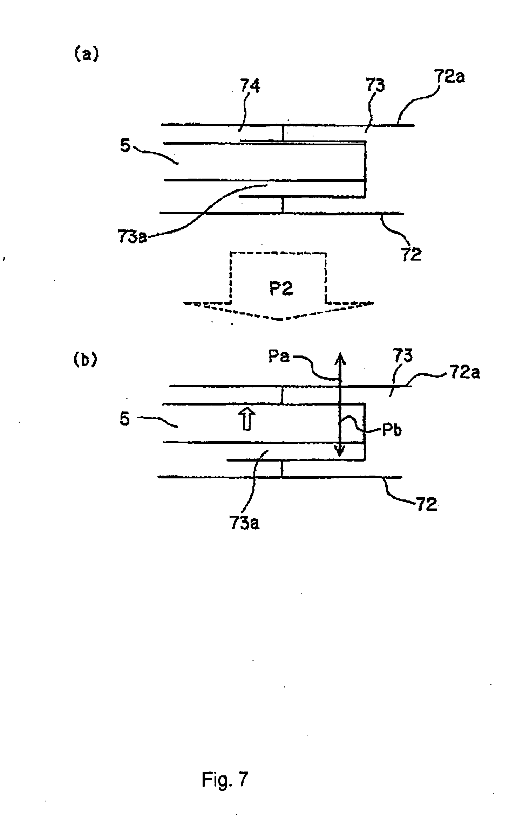

FIG. 7(a) is an image view showing a state where an annular groove is worn away due to long-term use in a seal structure according to a comparative example from an outer peripheral side of a seal ring, and FIG. 7(b) is a view for explaining an example where an oil pressure functions in the state depicted in FIG. 7(a). It is to be noted that like reference numerals denoting the constituent members in this embodiment are used for comparison with this embodiment in FIG. 7.

Since a thrust produced due to an oil pressure in the seal ring 1 functions vertically with respect to a surface constituting the groove bottom 73, a thrust Pa caused due to the oil pressure functions with respect to a distal end portion 73b of a worn groove bottom 73a associated with the distal end portion 5b of the protruding portion 5 in the seal ring in a direction inclined to the axial direction.

Further, a drag Pb with respect to the thrust Pa caused due to the oil pressure functions to the seal ring 1, and a component Pc in the peripheral direction is generated as this drag Pb.

Based on this component Pc in the peripheral direction, a force in a rotating direction of the seal ring 1 with respect to the worn groove bottom 73a (the annular groove 71, the shaft 70) is produced, and the seal ring 1 is thereby separated from the step 75 and moves in the axial direction.

When the thrust caused due to the oil pressure P2 functions to the seal ring 1 in the axial direction in this manner, the drag in the rotating direction of the seal ring 1 functions to the distal end portion 5b of the protruding portion 5, and the seal ring 1 can slightly rotate with respect to the annular groove 71 to be separated from the step 75.

As a result, even if the groove bottom 73 is worn away and the step 75 is generated during long-term use of the seal ring 1 and the oil pressure P2 functions, (the protruding portion 5) of the seal ring 1 can readily get across the step 75 and move in the axial direction, thereby assuring the seal surface for the side wall surface 72a (see FIG 5(b)).

It is to be noted that, when the distal end portion 5b of the protruding portion 5 of the seal ring 1 is not formed into the tapered shape, since the drag caused due to the thrust of the oil pressure functions in the axial direction only as shown in FIG. 7(b), the component in the peripheral direction is not generated, and the force that rotates the seal ring 1 is not produced.

## Claims

1. Sealing assembly, comprising a seal ring (1) and two members, wherein the seal ring (1) sealing a side wall surface (72) in a non-sealed subject fluid side (A) of an annular groove (71) provided in one member of two members assembled in such a manner as to be relatively rotatable in a concentric manner, and a front surface of the other member of the two members, thereby sealing an annular gap between the two members, in which a protruding portion (5) protruding toward a groove bottom (73) of the annular groove (71) is provided in a peripheral surface in a side arranged so as to face to the groove bottom (73) in a peripheral surface of a seal ring main body and that the protruding portion (5) is provided in such a manner that a width (5a) in an axial direction becomes narrower progressively decreasing toward the groove bottom (73), and is provided in such a manner that leading end regions in a peripheral direction become narrower progressively decreasing respectively toward a leading end portion in the peripheral direction, wherein a relative movement between the one member and the seal ring main body is regulated by being installed to the annular groove (71) having the groove bottom (73) provided with a notch portion (74) corresponding to the protruding portion (5), **characterized in that** there are two notch portions (74) wherein the two notch portions (74) are arranged at equal intervals in the circumferential direction and opposite to each other in the radial direction and at equal intervals in the circumferential direction to a separating portion (2) of the sealing ring (1).

## Patentansprüche

1. Dichtungsanordnung mit einem Dichtungsring (1) und zwei Gliedern, wobei der Dichtungsring (1) eine Seitenwandfläche (72) an einer nicht abgedichteten Fluidseite (A) einer Ringnut (71), die in einem Glied von zwei Gliedern vorgesehen ist, die so montiert sind, dass sie konzentrisch relativ drehbar sind, und eine Vorderseite des anderen Glieds der beiden Glieder abdichtet, wodurch ein ringförmiger Spalt zwischen den beiden Gliedern abgedichtet wird, wobei ein vorragender Teil (5), der zu einem Nutengrund (73) der Ringnut (71) vorragt, in einer Umfangsfläche an einer Seite vorgesehen ist, die so angeordnet ist, dass sie zu dem Nutengrund (73) in einer Umfangsfläche eines Dichtungsringhauptkörpers weist, und der vorragende Teil (5) so vorgesehen ist, dass eine Breite (5a) in einer Axialrichtung schmaler wird und sich zu dem Nutengrund (73) hin allmählich verkleinert, und so vorgesehen ist, dass Vorderendbereiche in einer Umfangsrichtung schmaler werden und sich jeweils zu einem Vorderendteil in Umfangsrichtung hin allmählich verkleinern, wobei eine Relativbewegung zwischen dem einen Glied und dem Dichtungsringhauptkörper **dadurch** reguliert wird, dass er an der Ringnut (71) installiert wird, deren Nutengrund (73) mit einem Kerbteil (74) versehen ist, der dem vorragenden Teil (5) entspricht, **dadurch gekennzeichnet, dass** zwei Kerbteile (74) vorgesehen sind, wobei die beiden Kerbteile (74) in gleichmäßigen Abständen in Umfangsrichtung und gegenüber einander in Radialrichtung und in gleichmäßigen Abständen in Umfangsrichtung zu einem Trennteil (2) des Dichtungsrings (1) angeordnet sind.

## Revendications

1. Ensemble d'étanchéité, comprenant une bague d'étanchéité (1) et deux organes, la bague d'étanchéité (1) scellant une surface de paroi latérale (72) dans un côté (A) d'un fluide objet non scellé d'une gorge annulaire (71) prévue dans un organe des deux organes assemblés de telle manière qu'ils puissent tourner l'un par rapport à l'autre de manière concentrique, et une surface frontale de l'autre organe des deux organes, en scellant ainsi un espace annulaire entre les deux organes, dans lequel une portion saillante (5) saillant vers un fond de gorge (73) de la gorge annulaire (71) est prévue dans une surface périphérique dans un côté agencé de manière à faire face au fond de gorge (73) dans une surface périphérique du corps principal de la bague d'étanchéité, la portion saillante (5) étant prévue d'une manière telle qu'une largeur (5a) dans une direction axiale devienne plus étroite en diminuant progressivement vers le fond de gorge (73) , et étant prévue d'une manière telle que des régions d'extrémité avant dans une direction périphérique deviennent plus étroites en diminuant progressivement respectivement vers une portion d'extrémité avant dans la direction périphérique, un mouvement relatif entre un des organes et le corps principal de la bague d'étanchéité étant régulé par le fait d'être installé contre la gorge annulaire (71) dont le fond de gorge (73) est pourvu d'une portion d'encoche (74) correspondant à la portion saillante (5) , **caractérisé en ce qu'**il y a deux portions d'encoche (74), les deux portions d'encoche (74) étant agencées à intervalles identiques dans la direction circonférentielle et en face l'une de l'autre dans la direction radiale et à intervalles identiques dans la direction circonférentielle par rapport à une portion de séparation (2) de la bague d'étanchéité (1),
